# EUROPÄISCHE PATENTSCHRIFT

(11) **EP 1 247 666 B1**
(45) Veröffentlichungstag und Bekanntmachung des Hinweises auf die Patenterteilung: **21.06.2006**
(21) Anmeldenummer: 02004904.5
(22) Anmeldetag: 05.03.2002
(51) Int. Cl.: B60H 1/00, F28D 9/00

(54) **Wärmetauscher und diesen enthaltende Heizungs- oder Klimaanlage eines Kraftfahrzeuges**
Heat exchanger and vehicle heating or air conditioning device comprising such a heat exchanger
Echangeur de chaleur et appareil de chauffage ou climatisation de voiture comprenant un tel échangeur de chaleur

(30) Priorität: 06.04.2001 DE 10117400
(43) Veröffentlichungstag der Anmeldung: 09.10.2002
(73) Patentinhaber: Behr GmbH & Co. KG, 70469 Stuttgart (DE)
(72) Erfinder: Klinger, Dietrich, Dipl.-Ing., 73540 Heubach (DE); Schwahn, Werner, 71701 Schwieberdingen (DE)
(74) Vertreter: Grauel, Andreas

(56) Entgegenhaltungen:
- DE-A- 19 510 847
- DE-A- 19 719 252

## Beschreibung

Die Erfindung betrifft einen Wärmetauscher in Scheibenbauweise gemäß dem Oberbegriff des Anspruchs 1, sowie eine damit ausgerüstete Heizungs- oder Klimaanlage für ein Kraftfahrzeug.

Eine Klimaanlage, wie sie beispielsweise aus der DE 198 04 389 bekannt ist, weist einen Verdampfer in sog. Scheibenbauweise auf. Der Verdampfer weist erste, aus jeweils einem Paar Scheiben gebildete Strömungskanäle für ein Kältemittel der Klimaanlage auf, sowie zwischen jeweils benachbarten Scheibenpaaren angeordnete Wellrippen, die von der zu kühlenden Luft umströmt werden. Derartige bekannte, sog. Scheibenverdampfer sind quaderförmig aufgebaut und werden in der Klimaanlage zwischen einem Gebläse und einem Heizkörper zur Kühlung der in den Fahrgastraum zu fördernden Luft eingesetzt.

Heutige Kraftfahrzeuge sollen möglichst kompakte Außenmaße aufweisen, wobei der Innenraum möglichst groß sein soll. Demzufolge besteht das Bestreben, die Klimaanlagen immer kompakter auszubilden, so daß sie möglichst wenig Bauraum beanspruchen. Es wird daher versucht, die einzelnen Komponenten der Klimaanlage kleiner und leistungsfähiger auszubilden, wie dies beispielsweise die DE 197 19 252 zeigt, bei der der beschriebene Verdampfer so ausgebildet ist, daß seine Bautiefe höchstens 50 mm beträgt.

DE 195 10 847 A offenbart einen Wärmetauscher gemäβ dem Oberbegriff des Anspruchs 1.

Ausgehend von diesem Stand der Technik ist es Aufgabe der Erfindung einen neuen, kompakten Wärmetauscher insbesondere für die Klimatisierung bereit zu stellen, sowie eine damit ausgerüstete Heizungs- oder Klimaanlage anzugeben, die einen kleineren Bauraum aufweist. Der Wärmetauscher soll einfacher herstellbar sein als bekannte Scheibenverdampfer.

Diese Aufgabe wird gelöst durch einen Wärmetauscher mit den Merkmalen des Anspruchs 1 sowie eine damit ausgerüstete Heizungs- oder Klimaanlage.

Der erfindungsgemäße Wärmetauscher ist in Scheibenbauweise aufgebaut, wobei zwischen je zwei Scheiben mindestens ein erster Strömungskanal für ein erstes Medium und zwischen je zwei Scheibenpaaren mehrere parallel geschaltete zweite Strömungskanäle für ein zweites Medium angeordnet sind, wobei die zweiten parallel geschalteten Strömungskanäle durch je eine Scheibe benachbarter Scheibenpaare gebildet sind. Dadurch können die bekannten Wellrippen, durch die bisher die zweiten Strömungskanäle gebildet waren, entfallen. Die Scheiben sind dazu entsprechend geformt.

Die Herstellung ist vereinfacht, da der gesamte Wärmetauscher durch einfaches Stapeln der Scheiben aufbaubar ist. Filigrane Wellrippen müssen nicht mehr zwischen den Scheibenpaaren vorgesehen werden, wodurch auch Herstellkosten reduzierbar sind. Ein weiterer Vorteil ist, daß Lötstellen zwischen Scheibe und Wellrippe entfallen. Dadurch entfallen auch die durch Lösen von Lötstellen verbundenen Problem für einen guten Wärmeübergang, wodurch der Wärmeübergang verbessert ist.

Die zweiten Strömungskanäle des erfindungsgemäßen Wärmetauschers weisen einen bogenförmigen Verlauf auf, so daß die Luft in eine gewünschte Richtung umgelenkt werden kann, wodurch ein kompakterer Aufbau, insbesondere der den erfindungsgemäßen Wärmetauscher enthaltenden Klimaanlage, möglich ist. Der Wärmetauscher übernimmt sowohl die Funktion des Kühlens oder Heizens der durchströmenden Luft, als auch eine Führung der Luft. Dadurch kann zumindest zu einem gewissen Grade auf Luftumlenkungen luftseitig vor und/oder nach dem Wärmetauscher verzichtet werden. Die Heizungs- oder Klimaanlage, bzw. das Luftführungsgehäuse dieser Anlage kann kompakter ausgebildet werden.

Ein weiterer Vorteil ist, daß wenn die ersten Strömungskanäle, die das erste Medium führen, das bei bevorzugtem Einsatz des Wärmetauschers als Verdampfer ein Kältemittel der Klimaanlage ist, relativ kleinen Druchmesser haben, die für die Verbindung benachbarter Scheiben zur Verfügung stehende Fläche relativ groß ist. Daraus resultiert eine hohe Druckstabilität der ersten Strömungskanäle, was den Einsatz des Wärmetauschers in einer Klimaanlage mit CO₂ als Kältemittel oder anderen Kältemittel, die bei hohen Drücken arbeiten, möglich macht.

Es ist dann ein sehr kompakter, druckstabiler und kostengünstig herstellbarer Wärmetauscher für den Einsatz in einer Klimaanlage mit CO₂ als Kältemittel erhalten.

Vorteilhafte Ausgestaltungen der Erfindung sind Gegenstand der abhängigen Ansprüche.

In strömungsgünstiger Weise verlaufen die zweiten Strömungskanäle vorzugsweise kreisbogenförmig. Dadurch ergeben sich für die Luft trotz Umlenkung geringe Druckverluste. Dabei können eine Anströmfläche und eine Austrittsfläche der Luft vorteilhafterweise in einem Winkel α zueinander angeordnet. Bevorzugt beträgt der Winkel α etwa 90°. Mit einem derartigen Wärmetauscher lassen sich kompakte Klimaanlagen aufbauen. Die Größe der Scheiben kann entsprechend der gewünschten Leistung und den vorgegebenen Bauräumen beliebig gestaltet werden.

Bevorzugt sind durch ein Scheibenpaar mehrere parallel verlaufende erste Strömungskanäle gebildet, damit ein die ersten Kanäle durchströmendes Kältemittel möglichst gleichmäßig das Scheibenpaar auf seiner gesamten Ersteckung temperiert. Die Kanäle sind dabei in etwa gleich lang, um in jedem Kanal in etwa den gleichen Druckabfall zu erhalten. Um den Wärmetausch mit dem zweiten Medium zu optimieren, haben die ersten Strömungskanäle zumindest bereichsweise bevorzugt einen mäanderförmigen Verlauf.

In konstruktiv günstiger Weise weisen die Scheiben auf einer ersten Seite kanalartige Vertiefungen auf, die bei Verbindung benachbarter Scheiben mit ihren ersten Seiten zu einem Scheibenpaar die ersten Strömungskanäle bilden.

Um die Verbindung zwischen benachbarten, mit ihren ersten Seiten verbundenen Scheiben zu erhöhen, um insbesondere eine hohe Druckfestigkeit der ersten Strömungskanäle für CO₂ Anwendungen zu erhalten, sind längs der Vertiefungen verlaufend, wenigstens ein nutartiger Steg und wenigstens eine federartige Rille angeordnet. Bei Zusammenfügen der ersten Seiten kommen die Stege der einen Scheibe in die Rillen der anderen Scheibe passgenau ineinander zu liegen und können miteinander verbunden, vorzugsweise verlötet oder verklebt werden.

Zur Bildung der zweiten Strömungskanäle weisen die Scheiben von ihrer zweiten Seite abstehende Stege auf. Benachbarte Scheiben sind über die Stege miteinander verbindbar.

Zur Reduzierung der Teilevielfalt sind jeweils benachbarte Scheiben nahezu spiegelsymmetrisch ausgebildet. Lediglich in ihren Verbindungsbereichen sind benachbarte Scheiben komplementär ausgebildet zur optimalen Verbindung der Scheiben. Es werden zur Herstellung des Wärmetauschers dann prinzipiell nur zwei verschiedene Arten von Scheiben benötigt.

Vorteilhafterweise können bei der Prägung der Scheiben an dem stromabseitigen Ende der zweiten Strömungskanäle Ausnehmungen eingeprägt werden, an denen, bei Einsatz des Wärmetauschers als Verdampfer, entstehendes Kondenswasser ablaufen kann. Auf spezielle Maßnahmen für einen Kondensatablauf kann verzichtet werden.

Bevorzugt bestehen die Scheiben aus Aluminium, wodurch das Gewicht gering gehalten und eine gute Verarbeitbarkeit gegeben ist. Es ist auch denkbar, daß die Scheiben aus einem Buntmetall bestehen.

Mit besonderem Vorteil ist der erfindungsgemäße Wärmetauscher in einer Klimaanlage, die mit CO₂ als Kältemittel arbeitet, als Verdampfer einsetzbar, da durch die flächige Verlötung benachbarter Scheiben mit ihren ersten Seiten zur Bildung der ersten Strömungskanäle für das CO₂ und insbesondere durch die optional vorgesehenen ineinandergreifenden Rillen und Stege, der Verdampfer den hohen Systemdrücken in einer CO₂-Anlage verbessert standhalten kann. Darüberhinaus kann in der bereits beschriebenen Weise Bauraum eingespart werden.

Eine sehr kompakte Heizungs- oder Klimaanlage ergibt sich, wenn der Wärmetauscher die Luft um etwa 90 Grad umlenkt.

Im folgenden wird die Erfindung anhand von Ausführungsbeispielen unter Bezugnahme auf die Zeichnung im einzelnen erläutert. In der Zeichnung zeigen
- Fig. 1: eine perspektivische Ansicht eines erfindungsgemäßen Wärmetauschers;
- Fig. 2: einen Teilbereich des Wärmetauschers mit vier Scheibenpaaren;
- Fig. 3: eine Draufsicht auf eine erste Seite einer Scheibe;
- Fig. 4: eine Ansicht einer zweiten Seite der Scheibe aus Fig. 3;
- Fig. 5: einen Querschnitt vier benachbarter Scheiben;
- Fig. 6: eine Ansicht abströmseitiger Enden zweiter Strömungskanäle;
- Fig. 7: eine erfindungsgemäße Klimaanlage mit einem erfindungsgemäßen Wärmetauscher als Verdampfer;

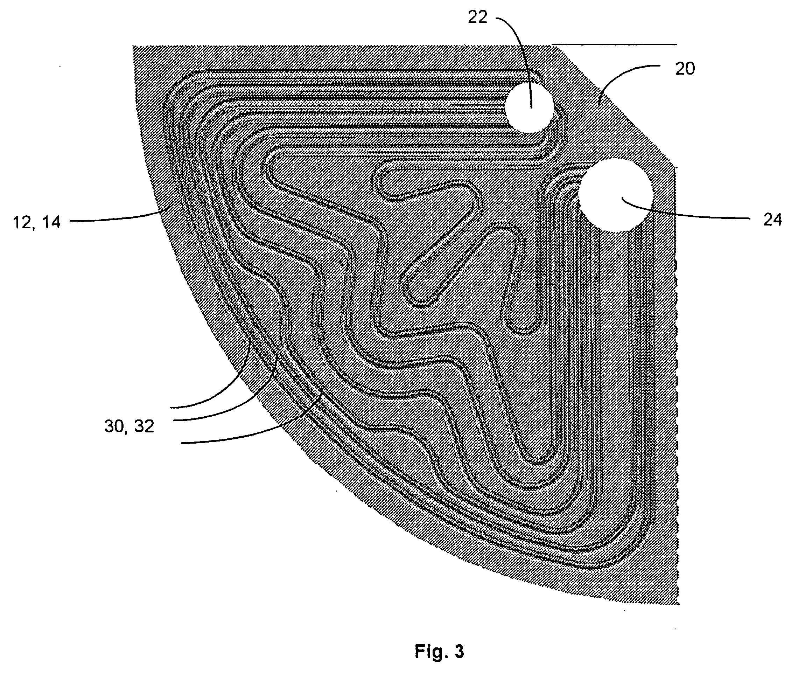

Ein in der Zeichnung dargestellter, erfindungsgemäßer Wärmetauscher 10 umfaßt erste und zweite Scheiben 12 und 14, die im wesentlichen den gesamten Wärmetauscher aufbauen, indem sie abwechselnd übereinander gestapelt bzw. aneinander gereiht sind und benachbarte Scheiben miteinander verlötet oder verklebt sind, wobei abwechselnd erste und zweite Strömungskanäle 16 und 18 ausgebildet werden. Der dargestellte Wärmetauscher 10 ist als Verdampfer eines Kältemittelkreises einsetzbar, weshalb die Strömungskanäle 16 zur Führung eines Kältmittels und die Strömungskanäle 18 zur Führung von Luft vorgesehen sind. Die Scheiben 12 und 14 sind im wesentlichen spiegelsymetrisch ausgebildet und haben eine äußere Form, die in dem Ausführungsbeispiel in etwa einem Viertelkreis entspricht (Fig. 3).

An einem einem Mittelpunkt des Kreises zugewandten Ende 20 weisen die Scheiben 12 und 14 zwei Durchgangsöffnungen 22 und 24 auf, wobei jede Durchgangsöffnung 22 und 24 jeweils einen Kragen 26 und 28 aufweisen, so daß im zusammengesetzten Zustand des Wärmetauschers 10 die Kragen benachbarter Scheiben miteinander verbindbar, insbesondere verlötbar sind, so daß die miteinander fluchtenden Durchgangsöffnungen 22 und 24 jeweils einen Sammelraum für ein erstes Medium bilden. Über einen nicht dargestellten Zulaufanschluß bzw. Ablaufanschluß wird das erste Medium dem Wärmetauscher 10 zu- bzw. abgefüht.

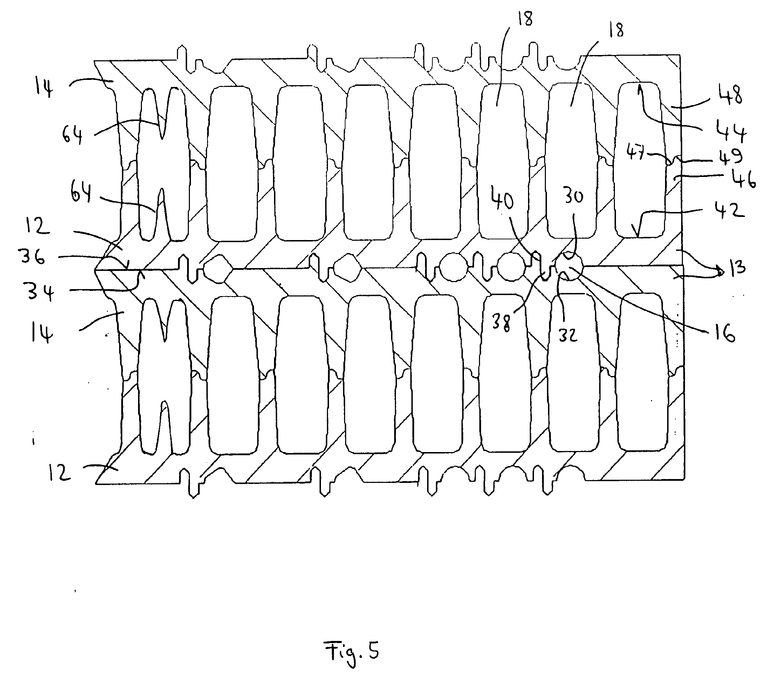

Die ersten Strömungskanäle 16 sind gebildet durch kanalartige Vertiefungen 30 bzw. 32 auf einer ersten Seite 34 bzw. 36 der ersten und/oder zweiten Scheiben 12 bzw. 14 (Fig. 5). Bei Verbinden benachbarter Scheiben 12 und 14 mit ihren ersten Seiten 34 und 36 zu einem Scheibenpaar 13 bilden die kanalartigen Vertiefungen 30 und 32 die ersten Strömungskanäle 16.

Um die Verbindung, insbesondere eine Lötverbindung, der Scheiben 12 und 14 an ihren ersten Seiten 34 und 36 zu verbessern, sind längs der Vertiefungen 30 und 32 verlaufend wenigstens ein federartiger Steg 38 und wenigstens eine nutartige Rille 40 vorgesehen, wobei bei Zusammenfügen der ersten Seiten 34 und 36 die Stege 38 der einen Scheibe 12 bzw. 14 in die Rillen 40 der anderen Scheibe 14 bzw. 12 passgenau ineinander zu Liegen kommen und miteinander verbunden, insbesondere verlötet, werden können (Fig. 5). In den Verbindungsbereichen auf den ersten Seiten 34 und 36 sind die Scheiben 12 und 14 somit komplementär zueinander ausgebildet.

Wie in Fig. 3 erkennbar, werden durch ein Scheibenpaar 13 mehrere der ersten Strömungskanäle 16 gebildet, wobei die Strömungskanäle 16 in einem Scheibenpaar parallel geschaltet sind und vorzugsweise in etwa gleich lang sind, wozu die weiter innen verlaufenden Strömungskanäle 16 wenigsten bereichsweise mäanderförmig verlaufen.

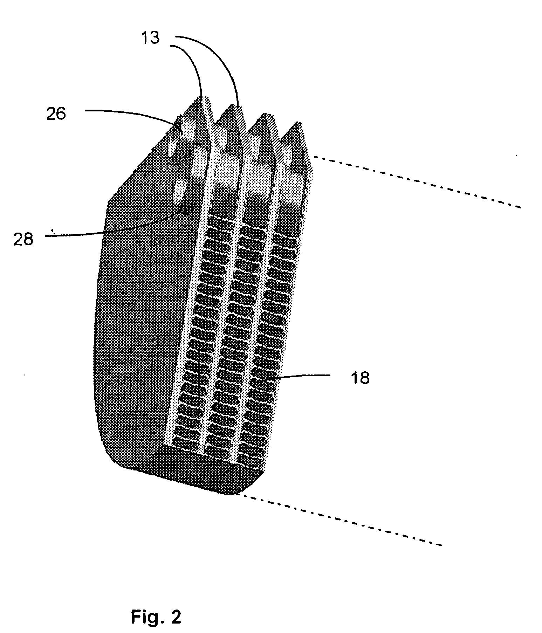

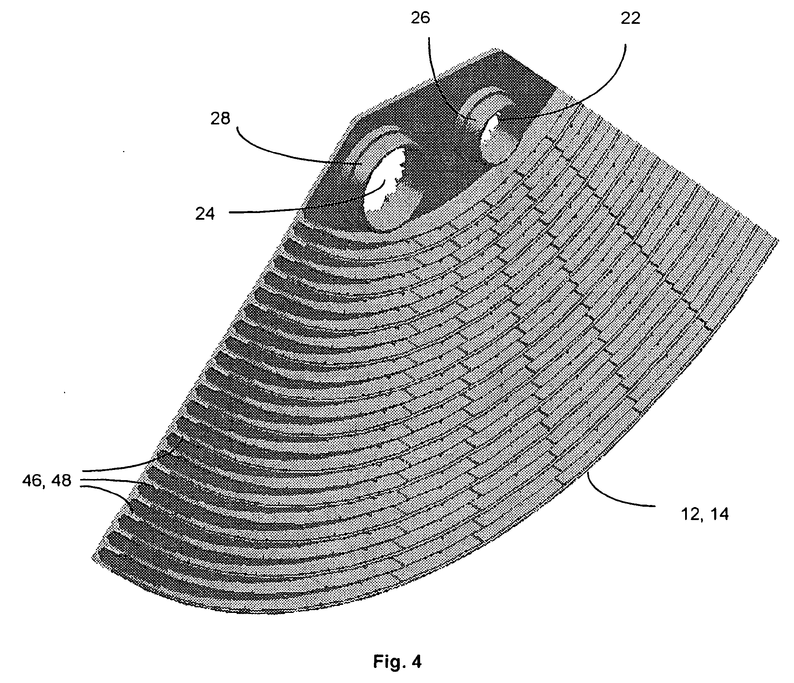

Auf einer zweiten Seite 42 bzw. 44 der ersten und/oder zweiten Scheibe 12 bzw. 14 sind von der zweiten Seite abstehende Stege 46 bzw. 48 angeordnet (Fig. 5). Benachbarte Scheiben 12 und 14 sind über die Stege 46 und 48 miteinander verbunden, beispielsweise verlötet oder verklebt, wobei die Verbindung entlang komplementär zueinander ausgebildeter Stirnränder 47 und 49 der Stege 46 und 48 erfolgt. Die Form der Stirnränder ist derart gewählt, daß bei Aufeinandersetzen zweier Scheiben 14 und 12 eine montagefreundliche Selbstzentrierung erfolgt. Durch die über ihre zweiten Seiten 42 und 44 miteinander verbundenen Scheiben 14 und 12 sowie die Stege 46 und 48 sind die zweiten Strömungskanäle 18 gebildet (Fig. 5). Die zweiten Strömungskanäle 18, die zwischen zwei Scheibenpaaren 13 gebildet sind, sind parallel geschaltet und zu ihren Enden hin offen, wie dies insbesondere in Fig. 2 erkennbar ist. In dem dargestellten Ausführungsbeispiel sind die zweiten Strömungskanäle 18 entsprechend der äußeren Form der Scheiben 12 und 14 bogenförmig, insbesondere kreisbogenförmig, ausgebildet (Fig. 4). In dieser Anordnung sind die einzelnen zweiten Strömungskanäle 18 unterschiedlich lang und werden mit größerem Abstand von dem Zulauf für das erste Medium, also von der Durchgangsöffnung 22, länger, so daß in der Nähe des Zulaufes, wo ein relativ großer Temperaturunterschied zwischen den beiden Medien besteht, die Strömungskanäle 18 relativ kurz sind, und daher der Wärmetausch nur über einen kürzeren Weg stattzufinden braucht. In größerem Abstand vom Zulauf, wo die Temperaturdifferenz zwischen den beiden Medien kleiner wird, sind die Strömungskanäle 18 vorteilhafterweise länger, so daß die Luft, die in dem Wärmetauscher unabhängig von der Lage des zweiten Strömungskanals 18 in einem bestimmten Strömungskanal 18 geführt ist, stets auf ein gleiches Temperaturniveau gebracht wird. Zusätzlich können in den nahe des Zulaufes verlaufenden, kürzeren Strömungskanälen 18 Zusatzrippen 64 angeordnet sein, um einen Wärmetausch in den kürzeren Strömungskanäle zu verbessern, wie dies in Fig. 5 in dem Strömungskanal 18, der am weitesten links liegt, angedeutet ist.

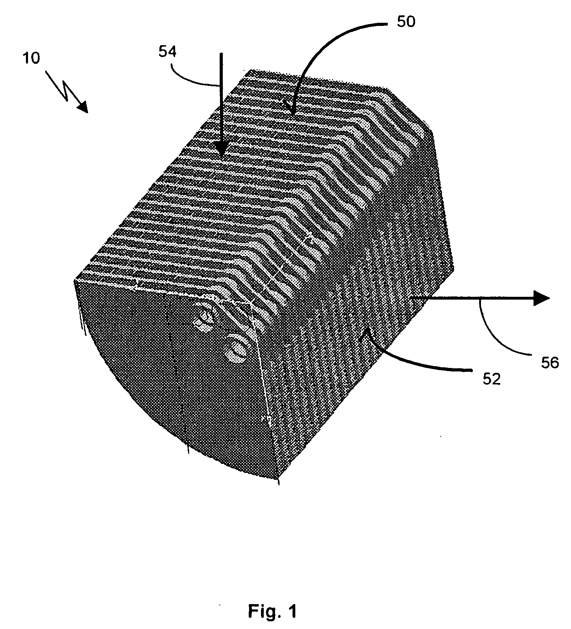

Die Enden der Strömungskanäle 18 liegen einerseits auf einer Luftanströmseite 50 und andererseits auf einer Luftaustrittseite 52 angeordnet (Fig. 1). Die in Richtung 54 strömende Luft tritt auf der Luftanströmseite 50 in die Strömungskanäle 18 ein und erfährt beim Durchströmen des Wärmetauschers 10 eine Richtungsänderung und tritt aus dem Wärmetauscher 10 auf der Luftaustrittseite 52 in Richtung 56 aus. In dem dargestellten Ausführungsbeispiel liegt die Luftaustrittsfläche 52 in einem Windel α von etwa 90° zu der Luftanströmfläche 50. Andere Winkel sind ohne weiteres denkbar.

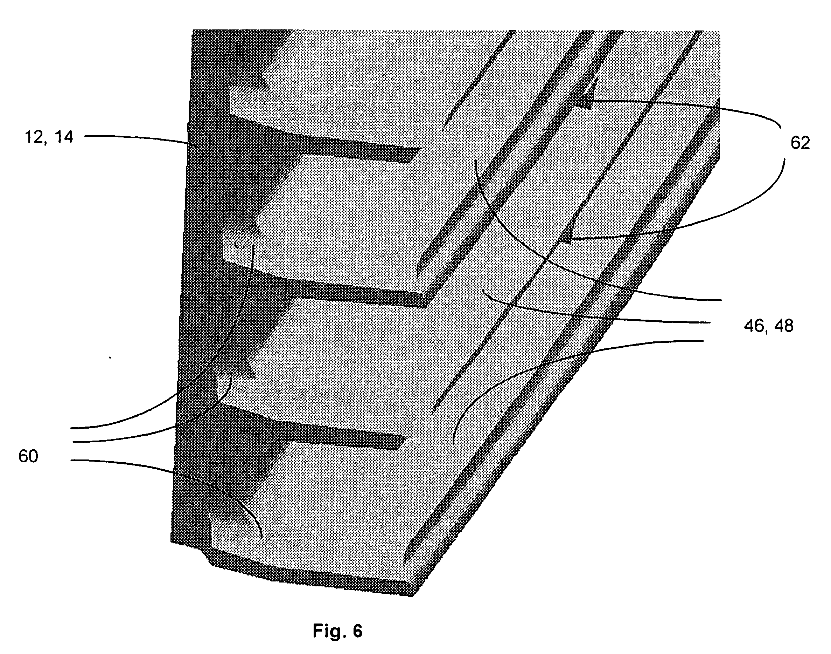

An den der Luftaustrittseite 52 zugeordneten Enden der zweiten Strömungskanäle 18 weisen diese in die Scheiben 12, 14 integrierte Kondenswasserablaufhilfen in Form von Ausnehmungen 60 auf, mittels derer in dem Wärmetauscher 10 sich absetzendes Kondenswasser verbessert ablaufen bzw. abtropfen kann (Fig. 6). Die Kondenswasserablaufhilfen können selbstverständlich auch eine andere geeignete Form haben. Wie in Fig. 6 weiter erkennbar ist, können an den Stegen 46, 48 Wirbelerzeuger 62 angeordnet sein, die eine Verwirbelung der durch die Strömungskanäle 18 strömenden Luft und damit einen verbesserten Wärmeübergang bewirken.

Die Scheiben 12 und 14 des Wäremtauschers 10 bestehen bevorzugt aus Aluminium und sind miteinander verlötet, was beispielsweise in einem Lötofen vorgenommen werden kann. Die Scheiben können auch miteinander verklebt sein oder auch aus einem Buntmetall bestehen.

Der Wärmetauscher 10 ist somit in einfachster Weise aus lediglich zwei verschiedenen Scheiben 12 und 14 aufgebaut. Es ist darüber hinaus möglich, an den Enden des Wärmetauschers 10 ebene Abschlußplatten 62 vorzusehen oder die jeweils äußersten Scheiben einseitig eben auszubilden.

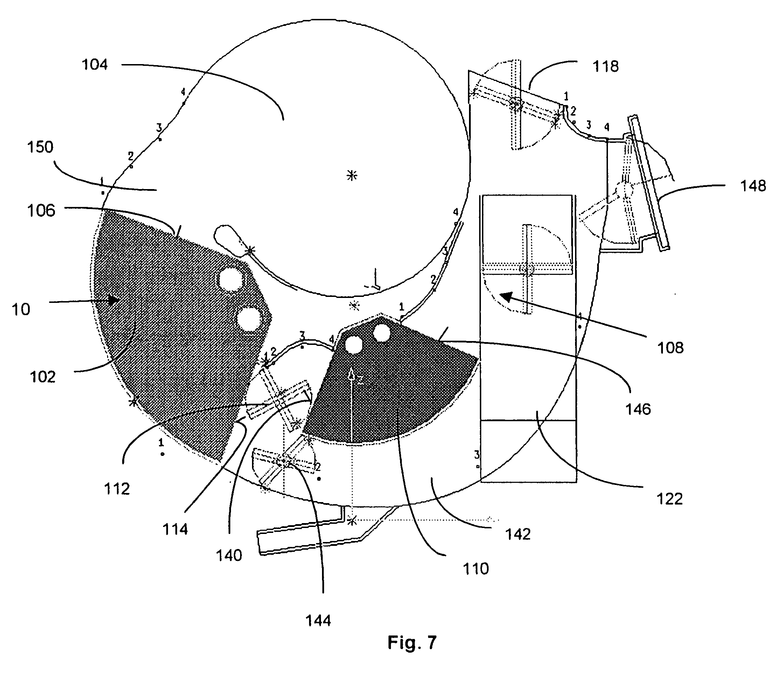

Der erfindungsgemäße Wärmetauscher 10 wird bevorzugt in Heizungs- oder Klimaanlagen eingesetzt, insbesondere in Klimaanlagen, in denen CO₂ als Kältemittel eingesetzt wird. In Fig. 7 ist ein Ausführungsbeispiel dargestellt, in dem der Wärmetauscher 10 als Verdampfer 102 eingesetzt ist. Zu konditionierende Luft wird von einem nicht näher dargestellten Radialgebläse 104 unmittelbar der Anströmfläche 106 des Verdampfers 102 zugeführt. In dem Verdampfer 102 wird die Luft abgekühlt und gleichzeitig umgelenkt um ca 90°. Über eine Mischklappe 112 kann aus dem Verdampfer 102 austretende Kaltluft einem Heizkörper 110 zugeführt werden und von dem Heizkörper 110 einem Luftmischraum 108 als Warmluft zugeführt werden. In dem dargestellten Ausführungsbeispiel ist auch der Heizkörper 110 in der erfindungsgemäßen Scheibenbauweise ausgebildet. Über eine Bypassklappe 144 kann Kaltluft an dem Heizkörper 110 vorbeigeführt und dem Luftmischraum 108 zugeführt werde.

In dem Luftmischraum 108 werden die Warmluft und die Kaltluft vermischt, um Luft einer gewünschten Temperatur zu erhalten. Vom Luftmischraum 108 zweigen ein Defrostluftkanal 118, ein Fußraumluftkanal 122 und ein Luftkanal 148 zu Ausströmern in der mittleren Ebene des Fahrzeug ab. Die vom Luftmischraum 108 abzweigenden Luftkanäle sind jeweils mit Luftklappen verschließbar.

## Patentansprüche

1. Wärmetauscher in Scheibenbauweise mit einem Zulauf für ein erstes Medium, wobei zwischen je zwei ein Scheibenpaar (13) bildende Scheiben (12 und 14) mindestens ein erster Strömungskanal (16) für das erstes Medium und zwischen je zwei Scheibenpaaren (13) mehrere parallel geschaltete zweite Strömungskanäle (18) für ein zweites Medium angeordnet sind, wobei die zweiten parallel geschalteten Strömungskanäle (18) durch je eine Scheibe (14, 12) benachbarter Scheibenpaare (13) gebildet sind und einen bogenförmigen Verlauf aufweisen, so dass das zweite Medium beim Durchströmen des Wärmetauschers (10) eine Strömungsrichtungsänderung erfährt, **dadurch gekennzeichnet dass** die zweiten Strömungskanäle (18) mit größerem Abstand von dem Zulauf länger ausgebildet sind.

2. Wärmetauscher nach Anspruch 1, **dadurch gekennzeichnet, dass** die zweiten Strömungskanäle (18) kreisbogenförmig verlaufen.

3. Wärmetauscher nach einem der vorhergehenden Ansprüche, **dadurch gekennzeichnet, dass** eine Anströmfläche (50) für das zweite Medium und eine Austrittsfläche (52) für das zweite Medium in einem Winkel (α) zueinander angeordnet sind.

4. Wärmetauscher nach einem der vorhergehenden Ansprüche, **dadurch gekennzeichnet, dass** durch ein Scheibenpaar (13) mehrere parallel geschaltete erste Strömungskanäle (16) gebildet sind, die in etwa gleich lang sind und wenigstens einige der ersten Strömungskanäle (16) zumindest bereichsweise mäanderförmig verlaufen.

5. Wärmetauscher nach einem der vorhergehenden Ansprüche, **dadurch gekennzeichnet, dass** die Scheiben (12, 14) auf einer ersten Seite (34, 36) kanalartige Vertiefungen (30, 32) aufweisen und ein Scheibenpaar (13) bildende, benachbarte Scheiben (12, 14) mit ihren ersten Seiten (34, 36) miteinander verbunden sind, zur Bildung der durch die Vertiefungen (30, 32) gebildeten ersten Strömungskanäle (16).

6. Wärmetauscher nach Anspruch 5, **dadurch gekennzeichnet, dass** längs der Vertiefungen (30, 32) verlaufend wenigstens ein federartiger Steg (38) und wenigstens eine nutartige Rille (40) angeordnet sind.

7. Wärmetauscher nach einem der Ansprüche 5 oder 6, **dadurch gekennzeichnet, dass** die Scheiben (12, 14) von ihrer zweiten Seite (42, 44) abstehende Stege (46, 48) aufweisen und benachbarte Scheiben (14, 12) über die Stege (46, 48) miteinander verbindbar sind zur Bildung der zweiten Strömungskanäle (18).

8. Wärmetauscher nach einem der vorhergehenden Ansprüche, **dadurch gekennzeichnet, dass** die Scheiben durch Prägen geformt sind.

9. Wärmetauscher nach einem der vorhergehenden Ansprüche, **dadurch gekennzeichnet, dass** jeweils benachbarte Scheiben (12, 14) im wesentlichen spiegelsymmetrisch und in ihren Verbindungsbereichen komplementär ausgebildet sind.

10. Wärmetauscher nach einem der vorhergehenden Ansprüche, **dadurch gekennzeichnet, dass** die Scheiben (12, 14) an ihrem stromabseltlgen Ende der zweiten Strömungskanäle (18) Ausnehmungen (60) aufweisen, zum Ablauf von Kondenswasser.

11. Wärmetauscher nach einem der vorhergehenden Ansprüche, **dadurch gekennzeichnet, dass** benachbarte Scheiben miteinander verlötet oder verklebt sind.

12. Wärmetauscher nach einem der vorhergehenden Ansprüche, **dadurch gekennzeichnet, dass** die Scheiben aus Aluminium bestehen.

13. Wärmetauscher nach einem der vorhergehenden Ansprüche, **dadurch gekennzeichnet, dass** die äußere Form der jeweils benachbarten Scheiben (12, 14) in etwa viertelkreisfönnig ist.

14. Heizungs- oder Klimaanlage für ein Kraftfahrzeug mit wenigstens einem Wärmetauscher (10) nach einem der vorhergehenden Ansprüche 1 bis 13.

15. Heizungs- oder Klimaanlage nach Anspruch 14, **dadurch gekennzeichnet, dass** der Wärmetauscher (10) ein Verdampfer (102) ist und als Kältemittel CO₂ oder andere Kältemittel, die bei hohen Drücken arbeiten, die ersten Strömungskanäle durchströmt.

16. Heizung oder Klimaanlage nach einem der vorhergehenden Ansprüche 14 oder 15, **dadurch gekennzeichnet, dass** der Wärmetauscher (10) ein Verdampfer (102) und/oder ein Heizkörper (110) ist und Luft die zweiten Strömungskanäle durchströmt.

17. Heizungs- oder Klimaanlage nach einem der vorhergehenden Ansprüche 14, 15 oder 16, **dadurch gekennzeichnet, dass** der Wärmetauscher (10,102. 110) die Luft um etwa 90° umlenkt.

## Claims

1. Heat exchanger in disc construction, with an inlet for a first medium, wherein at least one flow passage (16) for a first medium is provided between the discs (12 and 14) forming each pair of discs (13) and a plurality of second parallel flow passages (18) for a second medium is provided between two pairs of discs (13), and wherein the second parallel flow passages (18) are formed by a disc (14, 12) each of adjacent pairs of discs (13) and have a curved shape, so that the direction of flow of the second medium is altered when passing through the heat exchanger (10), **characterised in that** the second flow passages (18) running at a greater distance from the inlet are longer.

2. Heat exchanger according to claim 1, **characterised in that in that** the second flow passages (18) have the shape of a circular arc.

3. Heat exchanger according to any of the preceding claims, **characterised in that** an approach surface (50) for the second medium and an outlet surface (52) for the second medium are arranged at an angle (α) relative to one another.

4. Heat exchanger according to any of the preceding claims, **characterised in that** one pair of discs (13) forms a plurality of first flow passages (16) which are approximately equal in length, at least some of the first flow passages (16) meandering at least in some sections.

5. Heat exchanger according to any of the preceding claims, **characterised in that** the discs (12, 14) have groove-like recesses (30, 32) on a first side (34, 36) and adjacent discs (12, 14) forming a pair of discs (13) are joined to one another by their first sides (34, 36) to form the first flow passages (16) represented by the recesses (30, 32).

6. Heat exchanger according to claim 5, **characterised in that** at least one tongue-like web (38) and at least one groove-like flute (40) are arranged to run along the recesses (30, 32).

7. Heat exchanger according to claim 5 or 6, **characterised in that** the discs (12, 14) have webs (46, 48) projecting from their second side (42, 44) and adjacent discs (14, 12) can be joined by the webs (46, 48) to form the second flow passages (18).

8. Heat exchanger according to any of the preceding claims, **characterised in that** the discs are produced by stamping.

9. Heat exchanger according to any of the preceding claims, **characterised in that** adjacent discs (12, 14) are essentially designed mirror-symmetrical and complementary in their joining areas.

10. Heat exchanger according to any of the preceding claims, **characterised in that** the discs (12, 14) have recesses (60) for the discharge of condensate at the downstream end of the second flow passages (18).

11. Heat exchanger according to any of the preceding claims, **characterised in that** adjacent discs are soldered or bonded to one another.

12. Heat exchanger according to any of the preceding claims, **characterised in that** the discs are made of aluminium.

13. Heat exchanger according to any of the preceding claims, **characterised in that** the external shape of adjacent discs (12, 14) approximately resembles a quarter of a circle.

14. Heating or air conditioning system for a motor vehicle with at least one heat exchanger (10) according to any of the preceding claims 1 to 13.

15. Heating or air conditioning system according to claim 14, **characterised in that** the heat exchanger (10) is an evaporator (102) and the refrigerant flowing through the first flow passages is CO₂ or another refrigerant operating at high pressures.

16. Heating or air conditioning system according to any of the preceding claims 14 or 15, **characterised in that** the heat exchanger (10) is an evaporator (102) and/or a heater (110) and air flows through the second flow passages.

17. Heating or air conditioning system according to any of the preceding claims 14, 15 or 16, **characterised in that** the heat exchanger (10, 102, 110) deflects the air by approximately 90°.

## Revendications

1. Echangeur de chaleur du type à plaques comprenant une arrivée pour un premier produit (ou milieu), où au moins un premier canal d'écoulement (16), pour le premier produit, est disposé à chaque fois entre deux plaques (12 et 14) formant une paire de plaques (13), et plusieurs deuxièmes canaux d'écoulement (18) montés en parallèle, pour un deuxième produit (ou milieu), sont disposés à chaque fois entre deux paires de plaques (13), où les deuxièmes canaux d'écoulement (18) montés en parallèle sont formés par des paires de plaques (13) contiguës respectivement à une plaque (14, 12) et présentent un profil de forme arquée, de sorte que le deuxième produit, en traversant l'échangeur de chaleur (10), subit une modification de la direction d'écoulement,
**caractérisé en ce que** les deuxièmes canaux d'écoulement (18), placés à plus grande distance par rapport à l'arrivée, sont configurés en étant plus longs.

2. Echangeur de chaleur selon la revendication 1, **caractérisé en ce que** les deuxièmes canaux d'écoulement (18) s'étendent en forme d'arc de cercle.

3. Echangeur de chaleur selon l'une ou l'autre des revendications précédentes, **caractérisé en ce qu'**une surface d'entrée (50) pour le deuxième produit et une surface de sortie (52) pour le deuxième produit sont disposées l'une par rapport à l'autre, suivant un angle (α).

4. Echangeur de chaleur selon l'une quelconque des revendications précédentes, **caractérisé en ce que** plusieurs premiers canaux d'écoulement (16) montés en parallèle sont formés par une paire de plaques (13), lesquels canaux d'écoulement sont à peu près de la même longueur et au moins certains des premiers canaux d'écoulement (16) s'étendent, au moins par zones, en forme de méandres.

5. Echangeur de chaleur selon l'une quelconque des revendications précédentes, **caractérisé en ce que** les plaques (12, 14) présentent, sur un premier côté (34, 36), des creux (30, 32) en forme de canaux, et des plaques contiguës (12, 14) formant une paire de plaques (13) sont assemblées l'une à l'autre par leurs premiers côtés (34, 36), pour la formation des premiers canaux d'écoulement (16) formés par les creux (30, 32).

6. Echangeur de chaleur selon la revendication 5, **caractérisé en ce que** au moins une partie pleine (38) en forme de languette et au moins une gorge (40) en forme de rainure sont disposées le long des creux (30, 32).

7. Echangeur de chaleur selon la revendication 5 ou 6, **caractérisé en ce que** les plaques (12, 14) présentent des parties pleines (46, 48) dépassant de leur deuxième côté (42, 44), et des plaques contiguës (14, 12) peuvent être assemblées l'une à l'autre par les parties pleines (46, 48), pour la formation des deuxièmes canaux d'écoulement (18).

8. Echangeur de chaleur selon l'une quelconque des revendications précédentes, **caractérisé en ce que** les plaques sont formées par estampage.

9. Echangeur de chaleur selon l'une quelconque des revendications précédentes, **caractérisé en ce que** des plaques (12, 14) respectivement contiguës sont configurées pratiquement de façon symétrique et, dans leurs zones d'assemblage, de façon complémentaire.

10. Echangeur de chaleur selon l'une quelconque des revendications précédentes, **caractérisé en ce que** les plaques (12, 14) présentent des évidements (60) placés au niveau de l'extrémité - éloignée de l'écoulement - des plaques des deuxièmes canaux d'écoulement (18), lesdits évidements servant à l'évacuation de l'eau de condensation.

11. Echangeur de chaleur selon l'une quelconque des revendications précédentes, **caractérisé en ce que** des plaques contiguës sont brasées ou collées l'une à l'autre.

12. Echangeur de chaleur selon l'une quelconque des revendications précédentes, **caractérisé en ce que** les plaques sont en aluminium.

13. Echangeur de chaleur selon l'une quelconque des revendications précédentes, **caractérisé en ce que** la forme extérieure des plaques respectivement contiguës (12, 14) est à peu près celle d'un quart de cercle.

14. Système de chauffage ou de climatisation pour un véhicule automobile comprenant au moins un échangeur de chaleur (10) selon l'une quelconque des revendications précédentes 1 à 13.

15. Système de chauffage ou de climatisation selon la revendication 14, **caractérisé en ce que** l'échangeur de chaleur (10) est un évaporateur (102), et du dioxyde de carbone (CO₂) servant de produit réfrigérant, ou bien d'autres produits réfrigérants qui fonctionnent à des pressions élevées, traverse les premiers canaux d'écoulement.

16. Système de chauffage ou de climatisation selon la revendication 14 ou 15, **caractérisé en ce que** l'échangeur de chaleur (10) est un évaporateur (102) et/ou un radiateur (110), et de l'air traverse les deuxièmes canaux d'écoulement.

17. Système de chauffage ou de climatisation selon l'une des revendications 14, 15 ou 16, **caractérisé en ce que** l'échangeur de chaleur (10, 102, 110) dévie l'air à peu près de 90°.
